# EUROPEAN PATENT SPECIFICATION

(11) **EP 2 923 926 B1**
(45) Date of publication and mention of the grant of the patent: **08.02.2017**
(21) Application number: 15159355.5
(22) Date of filing: 17.03.2015
(51) Int. Cl.: B62J 17/02, B62J 23/00, B62K 11/04

(54) **Radiator shroud structure**
Kühlerummantelungsstruktur
Structure d'enveloppe de radiateur

(30) Priority: 28.03.2014 JP 2014067898
(43) Date of publication of application: 30.09.2015
(73) Proprietor: HONDA MOTOR CO., LTD., Tokyo, 107-8556 (JP)
(72) Inventor: Hosoya, Kyohei, Saitama 351-0193 (JP); Matsuo, Tomoya, Saitama 351-0193 (JP); Hirano, Kohei, Saitama 351-0193 (JP)
(74) Representative: Beder, Jens

(56) References cited:
- EP-A1- 0 447 899
- EP-A1- 1 785 344
- US-A1- 2008 223 643

## Description

The present invention relates to a radiator shroud structure.

A radiator shroud structure has conventionally been known which includes: a vehicle-body frame having a head pipe (2) and a pair of left and right main frames (10) extending rearward from the head pipe (2), the vehicle-body frame supporting a fuel tank (53) between the left and right main frames (10) and supporting a radiator (44) below the left and right main frames (10); and radiator shrouds (47) covering lateral sides of the radiator (44).

A structure according to the prior art is known from Japanese Patent Application Publication No. Hei 03-193585.

In the above-described conventional radiator shroud structure, upper portions of the radiator shrouds (47) are attached to attachment bosses (51) welded to lower portions of the main frames (10). For this reason, the main frames (10) are exposed, and outer faces of the main frames (10) are not protected.

The European patent application EP 1 785 3444 A1, on which the preamble of independent claim 1 is based, discloses a motor cycle comprising a head pipe, a pair of left and right tank rails which extend from the head pipe towards a vehicle rear direction and providing a frame shape, in which a head pipe neighbouring section of the tank rails becomes narrower, and a body cover which is provided on a vehicle outer side of the left and right tank rails. The body cover comprises a front side neighbouring section that is adjacent to a front side outer side section of the left and the right tank rails, a rear section, a rear side neighbouring section that is adjacent to the rear side outer side sections and an overhanging surface. The overhanging surface protrudes outwards in the vehicle width direction with respect to the front side outer side sections of the tank rails.

The European patent application publication EP 0 447 899 A1 shows a frame construction for a motorcycle. The frame construction for a motorcycle has a head pipe assembly including a head pipe adapted to journal a front wheel for steering movement, a pair of side main frame members affixed to said head pipe assembly and extending downwardly and rearwardly therefrom to a pivot point for a rear wheel suspension and a centre main frame affixed to said head pipe assembly and extending rearwardly therefrom.

The patent application publication US 2008/0223643 A1 discloses a motor cycle. The motor cycle discharges air that has passed through a radiator such that the air does not directly impinge on a rider and thus resolving discomfort. An air guide passage guides air that has passed through the radiator so that the air passes through a gap between a front side cover and a fuel tank to a portion higher than the fuel tank.

A problem to be solved by the present invention is to provide a radiator shroud structure capable of protecting outer faces of main frames.

For the purpose of solving the above-mentioned problem, the present invention provides problems a radiator shroud structure as defined in independent claim 1.

With this radiator shroud structure, since the shroud is fastened and fixed to the shroud fastening portion provided on the outer side wall of the corresponding main frame and the upper portion of the shroud is arranged along the outer side face of the main frame, it is possible to protect the outer face of the main frame by using the upper portion of the shroud.

Moreover, since the lower portion of the shroud extends downward from the upper portion and is coupled to the radiator and the upper portion of the shroud is arranged along the outer side face of the main frame, when stress is applied to the shroud, the upper portion of the shroud abuts on the outer side face of the main frame and is restricted in position by the outer side face. For this reason, it is possible to favorably suppress the deformation of the shroud.

Moreover, since the tank cover covering the fuel tank from above is provided, lower sides of the tank cover are arranged along upper sides of the main frames in a side view, and the shroud is arranged such that the upper portion of the shroud is arranged along the corresponding lower side of the tank cover and also flush with the lower side of the tank cover, it is possible to favorably protect the outer side face of the main frame by using the upper portion of the shroud, and also since the upper portion of the shroud and the lower side of the tank cover are flush with each other, it is possible for the rider to favorably move his/her legs.

Furthermore, since the upper portion of the shroud is restricted in position by the main frame across an entire vertical width thereof, it is possible to receive deformation of the shroud with a wide area and to thus disperse the stress.

The radiator shroud structure may be configured such that the tank cover and the fuel tank are fastened and fixed to the vehicle-body frame by being fastened together from above.

With this configuration, it is possible to fasten and remove the tank cover and the shrouds separately, and to achieve a favorable maintainability because the work of removing the fuel tank can be conducted from above.

The radiator shroud structure may be configured such that
the shroud fastening portion of each main frame includes a front fastening portion and a rear fastening portion which are arranged on front and rear sides, respectively, the upper portion of each shroud is fastened to the corresponding front fastening portion and the corresponding rear fastening portion, and the lower portion of each shroud supports the radiator.

With this configuration, it is possible to support the radiator by using the shroud.

The radiator shroud structure may be configured such that each shroud is fastened to the corresponding front fastening portion, the corresponding rear fastening portion, and the radiator from a lateral side of a vehicle body.

With this configuration, it is possible to achieve a favorable workability for removing the shroud, and to thus achieve a favorable maintainability.

The radiator shroud structure may be configured such that each shroud includes a notch located between the corresponding front fastening portion and the corresponding rear fastening portion and rearward of the radiator.

With this configuration, since the front fastening portion and the rear fastening portion are not connected in a straight line, it is possible to achieve a shape with which force acting on one of the fastening portions is unlikely to affect the other fastening portion, and to cause a favorable flow of air to the outside at a position rearward of the radiator and to thus achieve a favorable cooling efficiency of the radiator.

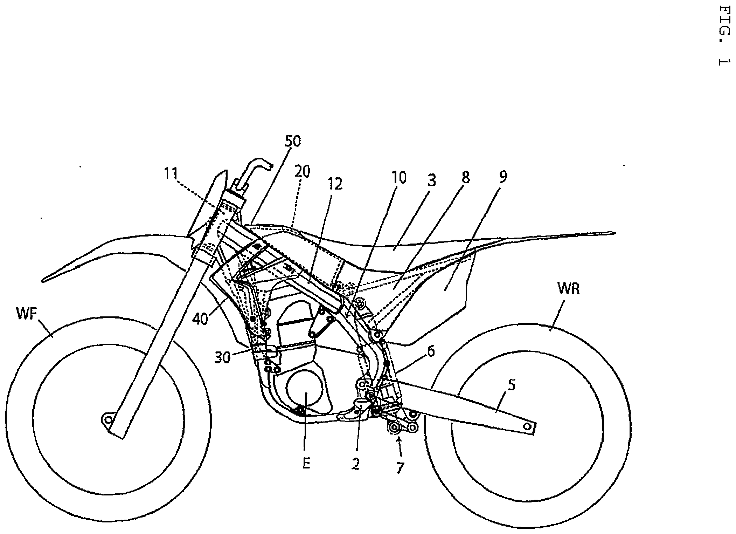

Fig. 1 is a side view illustrating a motorcycle which is an example of a saddle-ride type vehicle to which one embodiment of a radiator shroud structure according to the present invention is applied.

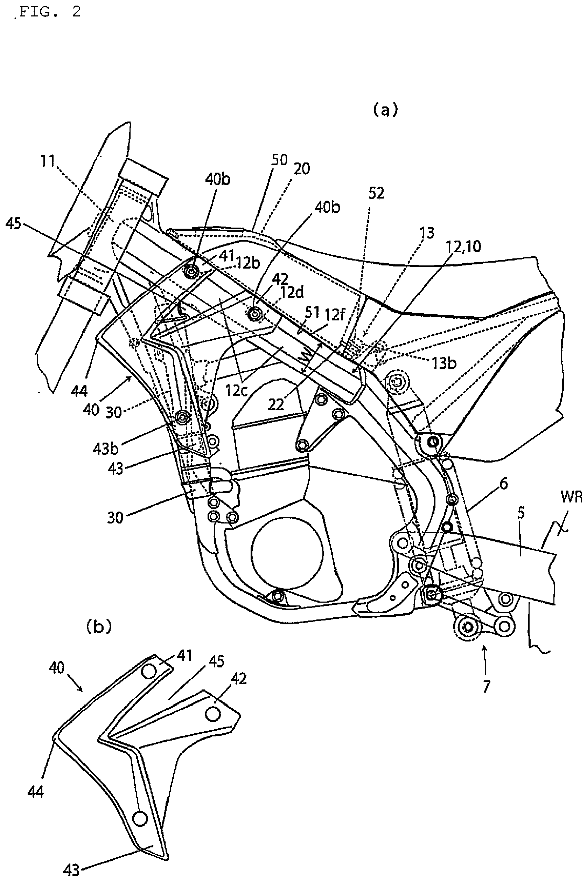

Part (a) of Fig. 2 is a partially enlarged view of Fig. 1, and Part (b) thereof is a side view of a shroud.
Fig. 3 is a partially enlarged plan view of Fig. 1.
Fig. 4 is a side view of a frame.
Fig. 5 is a partially omitted plan view of the frame.

Hereinafter, an embodiment of a radiator shroud structure according to the present invention will be described with reference to the drawings. Note that in the drawings, the same or corresponding portions are denoted by the same reference numerals.

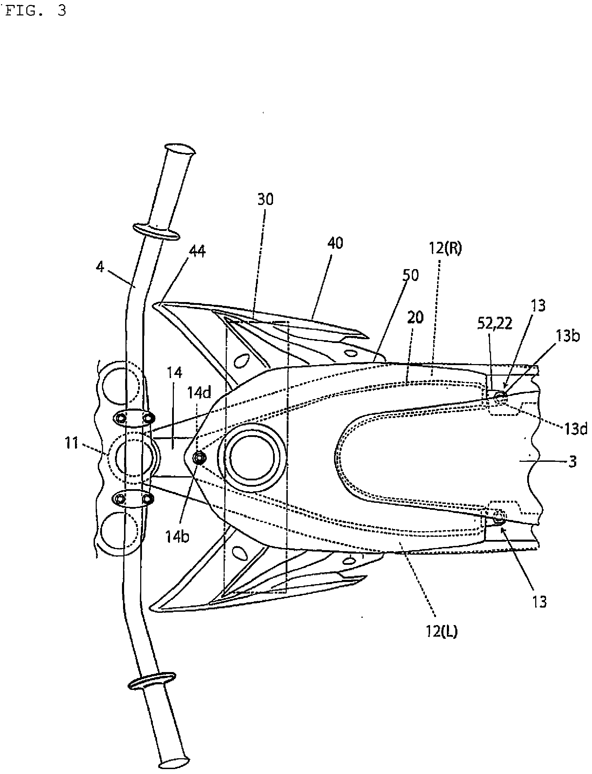

A motorcycle illustrated in Figs. 1 to 3 includes: a vehicle-body frame 10 having a head pipe 11 and a pair of left and right main frames 12 (L, R) extending rearward from the head pipe 11 (see Fig. 3), the vehicle-body frame 10 supporting a fuel tank 20 between the left and right main frames 12 and supporting a radiator 30 below the left and right main frames 12; and radiator shrouds (sometimes called simply as shrouds) 40 covering lateral sides of the radiator 30.

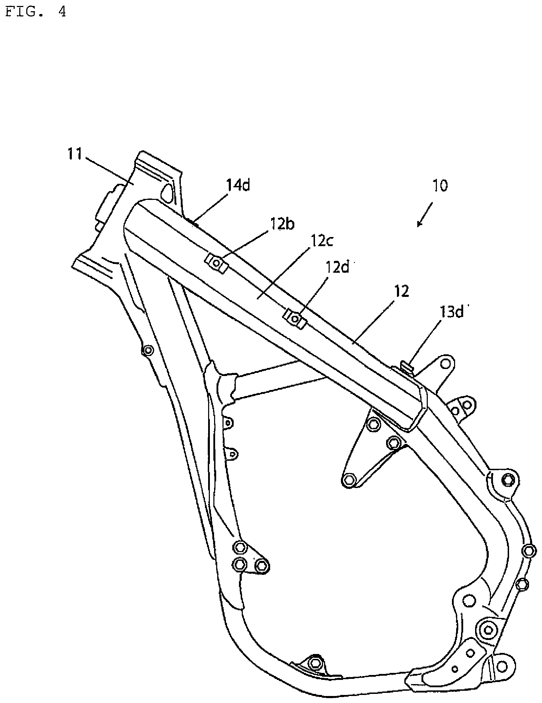

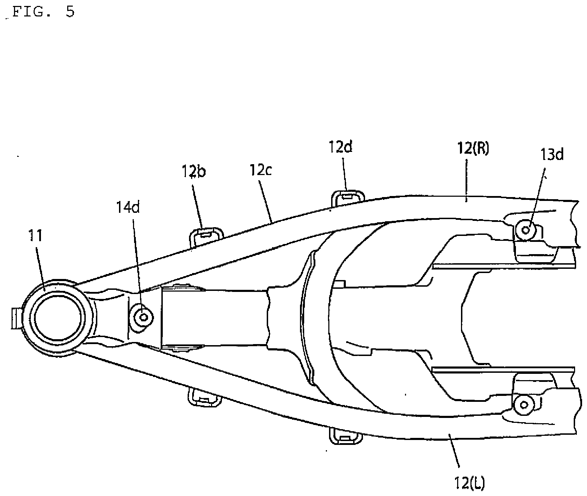

Each of the shrouds 40 is fastened and fixed to shroud fastening portions 12b, 12d (see Figs. 4 and 5), which are provided on an outer side wall 12c of the main frame 12, by using fastening members 40b (bolts are illustrated in the drawings). Upper portions 41, 42 of the shroud 40 are arranged along an outer side face (12c) of the main frame 12, and a lower portion 43 of the shroud 40 extends downward from the upper portions 41, 42 and is coupled to the radiator 30. Any structure as appropriate may be employed for coupling the lower portion 43 of the shroud 40 and the radiator 30. In the drawings, the lower portion 43 of the shroud 40 and the radiator 30 are fastened and fixed by using a bolt 43b.

With such radiator shroud structure, since the shroud 40 is fastened and fixed to the shroud fastening portions 12b, 12d (see Figs. 4 and 5), which are provided on the outer side wall 12c of the main frame 12, and the upper portions 41, 42 of the shroud 40 are arranged along the outer side face (12c) of the main frame 12, it is possible to protect the outer side face (12c) of the main frame 12 by using the upper portions 41, 42 of the shroud 40.

Moreover, since the lower portion 43 of the shroud 40 extends downward from the upper portions 41, 42 and is coupled to the radiator 30, and the upper portions 41, 42 of the shroud 40 are arranged along the outer side face (12c) of the main frame 12, when stress is applied to the shroud 40 (for example, when external force is applied to a front end 44 of the shroud 40, or in a similar case), the upper portions 41, 42 of the shroud 40 abut on the outer side face (12c) of the main frame 12 and are restricted in position by the outer side face (12c). For this reason, it is possible to favorably suppress the deformation of the shroud 40.

Moreover, since the shroud 40 is not fastened to the fuel tank 20, it is unnecessary to provide the fuel tank 20 with any fastening portion for the shroud 40. Therefore, it is possible to reduce the manufacturing cost for the fuel tank 20 and to achieve a favorable maintenance workability involving removal of the fuel tank 20. In particular, when the fuel tank 20 is made of an expensive titanium material, providing the fuel tank 20 with no fastening portion allows for significant reduction in the cost of the fuel tank 20.

The fuel tank 20 is provided with a tank cover 50 covering the fuel tank 20 from above.

Lower sides 51 of the tank cover 50 are arranged along upper sides 12f of the main frames 12 in a side view.

The shroud 40 is arranged such that the upper portions 41, 42 are arranged along the corresponding lower side 51 of the tank cover 50 and also flush with the lower side 51 of the tank cover 50.

With this configuration, it is possible to favorably protect the outer side face (12c) of the main frame 12 by using the upper portions 41, 42 of the shroud 40; also since the upper portions 41, 42 of the shroud 40 and the lower side 51 of the tank cover 50 are flush with each other, it is possible for the rider to favorably move his/her legs.

Furthermore, since the upper portions 41, 42 of the shroud 40 are restricted in position by the main frame 12 across an entire vertical width W thereof, it is possible to receive deformation of the shroud 40 with a wide area and to thus disperse the stress.

Note that in Fig. 1, a reference numeral 2 denotes a step on which the rider places his/her foot; 3 denotes a seat on which the rider sits down; and 4 denotes a handle to be steered by the rider. The handle 4 is turnably supported on the head pipe 11, and is used to steer a front wheel WF supported on a lower end of a front fork.

The tank cover 50 and the fuel tank 20 are fastened and fixed to the vehicle-body frame 10 by being fastened together from above. In Figs. 2 and 3, a reference numeral 13 denotes their fastening and fixing portion.

With this configuration, it is possible to fasten and remove the tank cover 50 and the shrouds 40 separately, and to achieve a favorable maintainability because the work of removing the fuel tank 20 can be conducted from above.

A pair of left and right attachment pieces 52, 22 are provided on a rear portion of the tank cover 50 and a rear portion of the fuel tank 20, respectively. The rear portion of the tank cover 50 and the rear portion of the fuel tank 20 are fixed to the main frames 12 by being fastened together to fixing portions 13d (see Figs. 4 and 5) of the main frame 12 by using bolts 13b with the attachment pieces 52, 22 being placed on each other. Front portions of the tank cover 50 and the tank cover 50 are also fixed to the vehicle-body frame 10 by being fastened together to a fixing portion 14d (see Figs. 4 and 5) provided on a coupling portion 14 between the main frames 12 (L, R) with a bolt 14b, which is a fastening member.

A shroud fastening portion in the main frame 12 includes a front fastening portion 12b and a rear fastening portion 12d which are arranged on the front and rear sides, and the upper portions 41, 42 of the shroud 40 are fastened to the front fastening portion 12b and the rear fastening portion 12d by using the fastening members 40b. The lower portion 43 of the shroud 40 supports the radiator 30.

With this configuration, it is possible to support the radiator 30 by using the shroud 40.

Any structure may be employed for connecting the lower portion 43 of the shroud 40 and the radiator 30 as appropriate. In this embodiment, the lower portion 43 of the shroud 40 is fixed to the radiator 30 by using the fastening member (bolt or the like) 43b.

The shroud 40 is fastened to the front fastening portion 12b, the rear fastening portion 12d, and the radiator 30 from the lateral side of the vehicle body.

With this configuration, it is possible to achieve a favorable workability for removing the shroud 40, and to thus achieve a favorable maintainability.

The shroud 40 includes a notch 45 located between the front fastening portion 12b and the rear fastening portion 12d and rearward of the radiator 30.

With this configuration, since the front fastening portion 12b and the rear fastening portion 12d are not connected in a straight line, it is possible to achieve a shape with which force acting on one of the fastening portions is unlikely to affect the other fastening portion, and to cause a favorable flow of air to the outside at a position rearward of the radiator 30 and to thus achieve a favorable cooling efficiency of the radiator 30.

Note that in Fig. 1 and the other drawings, a reference numeral E denotes an engine supported on the vehicle-body frame 10; 5 denotes a swingarm supported on the vehicle-body frame 10 and supporting a rear wheel WR at a rear end thereof; 6 denotes a cushion unit provided between the swingarm 5 and the vehicle-body frame 10 with a link 7 in between. A reference numeral 9 denotes a rear side cover, and 8 denotes a side cover. A side face of the tank cover 50, the side cover 8, and the rear side cover 9 form smoothly connected side faces of the vehicle.

Although the embodiment of the present invention has been described so far, the present invention is not limited to the above-described embodiment, and may be modified as appropriate within the scope of the present invention as defined in the appended claims.

### Explanation of the Reference Numerals

- 10:: VEHICLE-BODY FRAME
- 11:: HEAD PIPE
- 12:: MAIN FRAME
- 12b, 12d:: SHROUD FASTENING PORTION
- 12c:: OUTER SIDE WALL (OUTER SIDE FACE)
- 12f:: UPPER SIDE
- 20:: FUEL TANK
- 30:: RADIATOR
- 40:: SHROUD
- 41, 42:: UPPER PORTION
- 43:: LOWER PORTION
- 45:: NOTCH
- 50:: TANK COVER
- 51:: LOWER SIDE

## Claims

1. A radiator shroud structure comprising:
a vehicle-body frame (10) including a head pipe (11) and a pair of left and right main frames (12) extending rearward from the head pipe (11), the vehicle-body frame (10) supporting a fuel tank (20) between the left and right main frames (12) and supporting a radiator (30) below the left and right main frames (12); and
radiator shrouds (40) covering lateral sides of the radiator (30), wherein
each shroud (40) is fastened and fixed to a shroud fastening portion (12b, 12d) provided on an outer side wall (12c) of the corresponding main frame (12), an upper portion (41, 42) of each shroud (40) is arranged along an outer side face (12c) of the corresponding main frame (12), and a lower portion (43) of each shroud (40) extends downward from the upper portion (41, 42) and is coupled to the radiator (30), and **characterized in**
**that**
a tank cover (50) covering the fuel tank (20) from above is provided, wherein
lower sides (51) of the tank cover (50) are arranged along upper sides (12f) of the main frames (12) in a side view, and
each shroud (40) is arranged such that the upper portion (41, 42) of each shroud (40) is arranged along the corresponding lower side (51) of the tank cover (50) and also flush with the corresponding lower side (51) of the tank cover (50).

2. The radiator shroud structure according to claim 1, wherein
the tank cover (50) and the fuel tank (20) are fastened and fixed to the vehicle-body frame (10) by being fastened together from above.

3. The radiator shroud structure according to any one of claims 1 to 2, wherein
the shroud fastening portion (12b, 12d) of each main frame (12) includes a front fastening portion (12b) and a rear fastening portion (12d) which are arranged on front and rear sides, respectively,
the upper portion (41, 42) of each shroud (40) is fastened to the corresponding front fastening portion (12b) and the corresponding rear fastening portion (12d), and
the lower portion (43) of each shroud (40) supports the radiator (30).

4. The radiator shroud structure according to claim 3,
wherein each shroud (40) is fastened to the corresponding front fastening portion (12b), the corresponding rear fastening portion (12d), and the radiator (30) from a lateral side of a vehicle body.

5. The radiator shroud structure according to claim 3 or 4, wherein
each shroud (40) includes a notch (45) located between the corresponding front fastening portion (12b) and the corresponding rear fastening portion (12d) and rearward of the radiator (30).

## Patentansprüche

1. Luftführungskonstruktion für einen Kühler, umfassend:
Fahrzeugkarosserierahmen (10) aufweisend ein Kopfrohr (11) und ein Paar aus einem linken und einem rechten Hauptrahmen (12), die sich nach hinten von dem Kopfrohr (11) erstrecken, wobei der Fahrzeugkarosserierahmen (10) einen Kraftstofftank (20) zwischen dem linken und dem rechten Hauptrahmen (12) trägt und einen Kühler (30) unter dem linken und dem rechten Hauptrahmen (12) trägt; und
Luftführungen (40) für einen Kühler, die seitliche Seiten des Kühlers (30) abdecken, wobei
jede Luftführung (40) an einem Luftführungsbefestigungsabschnitt (12b, 12d) befestigt und fixiert ist, der an einer äußeren Seitenwand (12c) des entsprechenden Hauptrahmens (12) vorgesehen ist, ein oberer Abschnitt (41, 42) jeder Luftführung (40) entlang einer äußeren Seitenfläche (12c) des entsprechenden Hauptrahmens (12) angeordnet ist und ein unterer Abschnitt (43) jeder Luftführung (40) sich nach unten von dem oberen Abschnitt (41, 42) erstreckt und mit dem Kühler (30) verbunden ist, und
**dadurch gekennzeichnet, dass**
eine Tankabdeckung (50), die den Kraftstofftank (20) von oben abdeckt, vorgesehen ist, wobei
untere Seiten (51) der Tankabdeckung (50) entlang oberer Seiten (12f) der Hauptrahmen (12) in einer Seitenansicht angeordnet sind, und
jede Luftführung (40) so angeordnet ist, dass der obere Abschnitt (41, 42) jeder Luftführung (40) entlang einer entsprechenden unteren Seite (51) der Tankabdeckung (50) angeordnet ist und auch eben mit der entsprechenden unteren Seite (51) der Tankabdeckung (50) ist.

2. Luftführungskonstruktion für einen Kühler nach Anspruch 1,
wobei die Tankabdeckung (50) und der Kraftstofftank (20) an dem Fahrzeugkarosserierahmen (10) befestigt und fixiert sind durch gemeinsames Fixieren von oben.

3. Luftführungskonstruktion für einen Kühler nach einem der Ansprüche 1 oder 2,
wobei der Luftführungsbefestigungsabschnitt (12b, 12d) jedes Hauptrahmens (12) einen vorderen Befestigungsabschnitt (12b) aufweist und einen hinteren Befestigungsabschnitt (12d), die jeweils an einer Vorderseite und an einer Hinterseite angeordnet sind,
wobei der obere Abschnitt (41, 42) jeder Luftführung (40) an dem entsprechenden vorderen Befestigungsabschnitt (12b) und dem entsprechenden hinteren Befestigungsabschnitt (12d) befestigt sind, und
der untere Abschnitt (43) jeder Luftführung (40) den Kühler (30) trägt.

4. Luftführungskonstruktion für einen Kühler nach Anspruch 3,
wobei jede Luftführung (40) an dem entsprechenden vorderen Befestigungsabschnitt (12b), dem hinteren Befestigungsabschnitt (12d) und dem Kühler (30) von einer seitlichen Seite der Fahrzeugkarosserie befestigt ist.

5. Luftführungskonstruktion gemäß Anspruch 3 oder 4,
wobei jede Luftführung (40) eine Kerbe (45) aufweist, die zwischen dem entsprechenden vorderen Befestigungsabschnitt (12b) und dem entsprechenden hinteren Befestigungsabschnitt (12d) angeordnet ist und hinterhalb des Kühlers (30).

## Revendications

1. Structure d'enveloppe de radiateur comprenant :
un cadre de caisse de véhicule (10) comportant un tube de direction (11) et une paire de cadres principaux gauche et droit (12) s'étendant vers l'arrière depuis le tube de direction (11), le cadre de caisse de véhicule (10) supportant un réservoir de carburant (20) entre les cadres principaux gauche et droit (12) et supportant un radiateur (30) en dessous des cadres principaux gauche et droit (12) ; et
des enveloppes de radiateur (40) couvrant des côtés latéraux du radiateur (30), dans laquelle
chaque enveloppe (40) est attachée et fixée à une portion d'attache d'enveloppe (12b, 12d) prévue sur une paroi de côté extérieur (12c) du cadre principal (12) correspondant, une portion supérieure (41, 42) de chaque enveloppe (40) est agencée le long d'une face de côté extérieur (12c) du cadre principal (12) correspondant, et une portion inférieure (43) de chaque enveloppe (40) s'étend vers le bas depuis la portion supérieure (41, 42) et est couplée au radiateur (30), et **caractérisée en ce que**
un couvercle de réservoir (50) couvrant le réservoir de carburant (20) par le dessus est prévu, dans laquelle
des côtés inférieurs (51) du couvercle de réservoir (50) sont agencés le long de côtés supérieurs (12f) des cadres principaux (12) en vue de côté, et
chaque enveloppe (40) est agencée de sorte que la portion supérieure (41, 42) de chaque enveloppe (40) soit agencée le long du côté inférieur (51) correspondant du couvercle de réservoir (50) et également affleure le côté inférieur (51) correspondant du couvercle de réservoir (50).

2. Structure d'enveloppe de radiateur selon la revendication 1, dans laquelle
le couvercle de réservoir (50) et le réservoir de carburant (20) sont attachés et fixés au cadre de caisse de véhicule (10) en étant attachés conjointement par le dessus.

3. Structure d'enveloppe de radiateur selon l'une quelconque des revendications 1 à 2, dans laquelle
la portion d'attache d'enveloppe (12b, 12d) de chaque cadre principal (12) comporte une portion d'attache avant (12b) et une portion d'attache arrière (12d) qui sont agencées sur des côtés avant et arrière, respectivement,
la portion supérieure (41, 42) de chaque enveloppe (40) est attachée à la portion d'attache avant (12b) correspondante et à la portion d'attache arrière (12d) correspondante, et
la portion inférieure (43) de chaque enveloppe (40) supporte le radiateur (30).

4. Structure d'enveloppe de radiateur selon la revendication 3, dans laquelle
chaque enveloppe (40) est attachée à la portion d'attache avant (12b) correspondante, à la portion d'attache arrière (12d) correspondante, et au radiateur (30) depuis un côté latéral d'une caisse de véhicule.

5. Structure d'enveloppe de radiateur selon la revendication 3 ou 4, dans laquelle
chaque enveloppe (40) comporte une encoche (45) située entre la portion d'attache avant (12b) correspondante et la portion d'attache arrière (12d) correspondante et vers l'arrière du radiateur (30).
